# FASCICULE DE BREVET EUROPEEN

(11) **EP 3 121 344 B1**
(45) Date de publication et mention de la délivrance du brevet: **01.05.2019**
(21) Numéro de dépôt: 16177635.6
(22) Date de dépôt: 01.07.2016
(51) Int. Cl.: E04B 2/74, F16B 12/20, F16B 12/02, F16B 7/18, A47B 96/04

(54) **ÉQUIPEMENT DE CLOISONNEMENT**
AUSRÜSTUNG ZUM ABSCHIRMEN
PARTITION EQUIPMENT

(30) Priorité: 20.07.2015 FR 1556858
(43) Date de publication de la demande: 25.01.2017
(73) Titulaire: Expo Profile, 59420 Mouvaux (FR)
(72) Inventeur: Hardy, Georges, 59890 QUESNOY SUR DEULE (FR)
(74) Mandataire: Cabinet Plasseraud

(56) Documents cités:
- EP-A1- 0 552 647
- US-A- 3 934 382
- US-A- 4 269 005
- US-A1- 2002 023 391

## Description

### Domaine technique et art antérieur

La présente invention concerne l'aménagement de locaux nus, et porte plus particulièrement sur le cloisonnement d'un espace ouvert tel que par exemple une salle d'exposition ou un plateau d'immeuble de bureaux.

Un des objectifs de la présente invention est de fournir un équipement de cloisonnement, modulaire, permettant d'installer facilement, rapidement et sans outillage des cloisons pour aménager un espace ouvert.

La présente invention trouve ainsi une application avantageuse dans l'organisation d'expositions, de congrès ou de salons en permettant l'aménagement en un minimum de temps d'un espace ouvert.

Bien évidemment, d'autres applications avantageuses peuvent être envisagées dans le cadre de la présente invention comme par exemple l'aménagement de plateaux d'immeuble de bureaux.

Classiquement, l'organisation d'une exposition, d'un congrès ou d'un salon est réalisée dans une salle louée à cette occasion.

Le coût de location de la salle, souvent prohibitif, oblige généralement les organisateurs à réduire au maximum la durée de location.

Pour des raisons évidentes d'organisation, l'exposition ne peut être différée ou retardée : l'aménagement de la salle de location doit donc être réalisé le plus tardivement possible en un minimum de temps pour permettre l'organisation de la manifestation le jour prévu à l'heure prévue.

L'aménagement d'une salle comprend notamment la pose d'une moquette ou d'un revêtement, le cloisonnement, l'électrification et l'éclairage de celle-ci ainsi que l'installation de la signalétique et du mobilier.

Bien souvent, les organisateurs sous-traitent cet aménagement à un installateur spécialisé pour réaliser ce genre de prestations.

Comme indiqué ci-dessus, l'installateur dispose d'un temps réduit pour réaliser l'ensemble de sa mission ; à titre d'exemple, il est prévu généralement une journée complète de travail pour une installation moyenne d'environ 4000 m².

Si l'on s'intéresse plus particulièrement au cloisonnement d'une telle surface, ceci représente l'installation d'environ 200 cloisons.

On comprend aisément que, pour respecter ces délais (une journée de travail) et réaliser ce travail (monter environ 200 cloisons), l'installateur doit faire preuve d'une organisation sans faille en faisant intervenir des équipes expérimentées composées de personnes compétentes.

Le coût de la main d'oeuvre représente environ 40% du prix de la prestation de cloisonnement.

Il est donc important de réduire le temps d'intervention des opérateurs en réduisant au maximum les manipulations à réaliser pour le montage et le démontage des cloisons.

Le montage et le démontage de cloisons demeurent néanmoins des opérations relativement longues et fastidieuses.

Traditionnellement, les éléments composant une cloison (montants verticaux ou poteaux, traverse basse, traverse haute, et panneau de cloisonnement) arrivent sur le chantier, démontés, dans des conteneurs adaptés pour chaque élément.

Un opérateur dépose au sol les montants et les traverses.

Il assemble ensuite les montants avec les traverses basses pour obtenir une forêt de poteaux maintenus en position verticalement par les traverses basses.

L'opérateur monte ensuite sur une échelle et, pour chaque cloison, glisse par le haut de la structure le panneau de cloisonnement, puis ferme le cadre avec une traverse haute.

Ces opérations sont réitérées pour chaque cloison.

L'ensemble de ces manipulations représente en moyenne une dizaine de minutes par cloison.

Le Demandeur observe que ces manipulations répétitives sont fatigantes : l'opérateur est d'abord à genoux pour l'assemblage de la traverse basse avec les montants ; il se relève ensuite pour se saisir du panneau de cloisonnement dans le conteneur ; il parcourt la distance entre le conteneur et la structure à monter, glisse par le haut le panneau dans le cadre avec le risque de se couper les mains par le frottement du panneau glissant qu'il faut retenir lors de sa descente ; il saisit ensuite la traverse posée au sol et monte une nouvelle fois à l'échelle pour assembler la traverse haute avec les montants en fermant le cadre. Il redescend de l'échelle et répète à nouveau l'opération pour la cloison suivante.

Lors du démontage, il faut réaliser les mêmes opérations en sens inverse, puis ranger tous les éléments dans le conteneur correspondant.

Il existe aujourd'hui dans l'état de la technique plusieurs systèmes pour faciliter le travail des installateurs et sécuriser l'installation des cloisons.

On connaît notamment le document FR 2 834 020 qui divulgue un système de cloisonnement pour espace ouvert dans lequel le poteau comporte au moins une rainure longitudinale présentant une section sensiblement en forme de T.

Dans ce document, la cloison comporte en saillie de chaque bord latéral un pion possédant une tête destinée à être logée par coulissement dans la rainure du poteau à partir de son extrémité.

L'opérateur doit positionner le pion du panneau dans la rainure par le haut du poteau pour le faire coulisser jusqu'en bas afin d'assembler solidairement la cloison et le poteau.

Dans ce document, les cloisons sont pré-montées ; il n'est plus nécessaire de fixer les traverses hautes et basses. Il suffit de fixer solidairement la cloison au poteau par coulissement du pion dans la rainure.

Une telle manipulation reste tout de même complexe à réaliser.

On connaît également le document US 2002/023391 qui divulgue un système de cloisonnement.

Dans ce document, il est proposé l'engagement d'un élément de verrouillage dans la rainure du poteau.

Plus particulièrement, le système proposé dans ce document comporte un outillage dont l'actionnement permet la déformation de l'élément de verrouillage pour empêcher le désengagement dudit élément.

Le système proposé dans ce document US 2002/023391 est avantageux par rapport au document FR 2 834 020 en ce que l'assemblage de la cloison avec le poteau ne se fait plus par le coulissement d'un élément de verrouillage par le haut.

Néanmoins, la solution proposée dans ce document requiert un outillage spécifique impliquant une manipulation supplémentaire.

Dans le document WO 00/42327, il est prévu de la même façon un mécanisme de mâchoires se refermant, par vissage, sur un téton afin d'assembler la cloison avec le poteau.

Le système proposé dans ce document requiert lui aussi un outillage spécifique avec une opération supplémentaire de vissage pour sécuriser l'assemblage de la cloison avec le poteau.

Le Demandeur soumet ainsi que les systèmes proposés dans les documents US 2002/023391 et WO 00/42327 visent davantage à sécuriser la connexion entre la cloison et le poteau qu'à faciliter l'assemblage.

Chacun de ces systèmes nécessite par ailleurs un outillage spécifique et des manipulations supplémentaires. Dans la pratique (c'est-à-dire sur un chantier), l'utilisation d'un tel outillage complexifie davantage les phases de montage et de démontage.

On connait encore du document EP 0 552 647 du domaine industriel, un système de cloison qui comprend un poteau, repéré 1 qui comporte une pluralité de premières nervures, en saillie, s'étendant le long dudit poteau et présentant chacune une section sensiblement en forme de T, chaque paire de nervures voisines entre elles formant une rainure d'accroche.

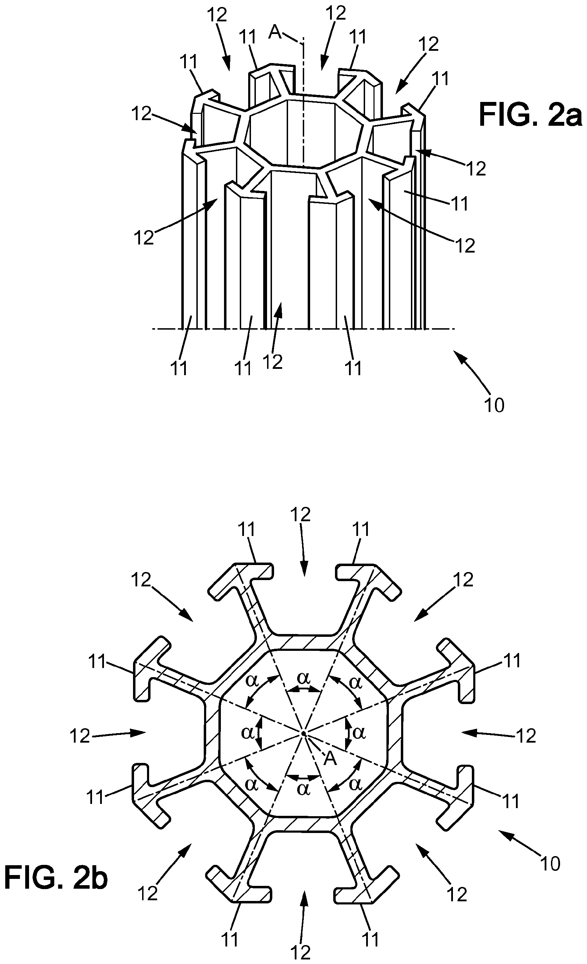

Cet équipement comprend un profilé d'accroche, repéré 10, qui comporte une partie saillante s'insérant par emboitement dans une rainure du poteau, par un mouvement d'insertion, puis de pivotement, et comme illustré à la figure 2.

Dans cette antériorité, le profilé d'accroche et le poteau multidirectionnel associé sont conçus de manière à permettre un assemblage du profilé d'accroche au poteau uniquement lorsque le profilé d'accroche est libre, c'est-à-dire non monté au panneau repéré 5 de la cloison : le montage final du panneau repéré 5 au profilé d'accroche permet le verrouillage de l'assemblage.

### Objet et résumé de la présente invention

La présente invention vise à améliorer la situation décrite ci-dessus.

Un des objectifs de la présente invention est de remédier aux différents inconvénients mentionnés ci-dessus en proposant une solution simple et facile à mettre en oeuvre permettant d'aménager en un minimum de temps et de manipulations un espace ouvert avec des cloisons pré-montées, sans utiliser un quelconque outillage.

A cet effet, l'objet de la présente invention concerne selon un premier aspect un équipement de cloisonnement modulaire d'un espace ouvert.

Par espace ouvert au sens de la présente invention, il faut comprendre un espace nu devant être aménagé, tel que par exemple une salle d'exposition vide ou un plateau d'immeuble de bureaux.

Selon la présente invention, l'équipement comporte :
- au moins un poteau, dit premier poteau directionnel, comprenant une pluralité de premières nervures, en saillie, s'étendant le long dudit premier poteau directionnel et présentant chacune une section sensiblement en forme de T, chaque paire de nervures voisines entre elles formant une rainure d'accroche,
- au moins une cloison, dite première cloison, comportant un panneau de cloisonnement et un premier montant vertical formé par un profilé comprenant une deuxième nervure, dite deuxième nervure d'accroche, présentant une section sensiblement en forme de L permettant l'assemblage solidaire de la première cloison avec ledit au moins un premier poteau directionnel obtenu par emboitement en façade de ladite deuxième nervure d'accroche dans l'une des rainures d'accroche dudit premier poteau directionnel,

Selon l'invention, ladite au moins une première cloison est une cloison pré-montée, qui comporte le panneau de cloisonnement, ainsi que le premier montant vertical formé par ledit profilé comprenant la deuxième nervure d'accroche, ladite au moins une première cloison comportant encore une traverse haute, une traverse basse, ainsi qu'un deuxième montant formé par un deuxième poteau directionnel, destiné à coopérer avec un profilé d'accroche d'une deuxième cloison.

Selon l'invention, ladite première cloison est une cloison pré-montée avant l'assemblage solidaire de la cloison pré-montée avec ledit au moins un premier poteau directionnel obtenu par emboitement en façade de ladite deuxième nervure d'accroche dans l'une des rainures d'accroche dudit premier poteau directionnel, par un mouvement d'engagement de ladite deuxième nervure d'accroche dans ladite rainure d'accroche puis par un mouvement de pivotement de la première cloison pré-montée de manière à ce que le L de la deuxième nervure vienne en butée contre le T d'une des premières nervures de ladite rainure d'accroche pour empêcher un désengagement de ladite deuxième nervure d'accroche.

Un tel emboitement en façade permet d'assembler solidairement la cloison avec le poteau.

Grâce à cette combinaison de moyens techniques, caractéristique de la présente invention, l'opérateur en charge du cloisonnement d'un espace ouvert dispose d'un mécanisme d'assemblage simple à mettre en oeuvre.

Il lui suffit d'engager la nervure du profilé dans l'une des rainures du poteau puis, une fois engagée, de faire pivoter le profilé.

Cette cinématique simple à exécuter permet un blocage en position de la cloison par rapport au poteau.

L'opérateur peut donc enchaîner le montage en série de cloisons pré-montées (traverse haute, traverse basse, profilés, panneau de cloisonnement) sans outillage spécifique.

Un tel mécanisme facilite les opérations de cloisonnement d'un espace nu, ce qui réduit le temps d'intervention des opérateurs.

Afin de sécuriser l'assemblage entre le poteau et la cloison, le profilé comporte au moins un trou taraudé dans lequel est introduite une vis pour le verrouillage en position de la cloison avec le poteau.

Cette manipulation supplémentaire peut intervenir à la fin du montage. Elle peut se faire par un simple système vis-écrou.

Alternativement, un cavalier de verrouillage peut permettre de bloquer l'assemblage entre deux cloisons pré-montées. Ainsi deux cloisons pré-montées successives sont assemblées de manière coplanaire, par emboitement de la deuxième nervure d'accroche du profilé d'une des cloisons pré-montées dans l'une des rainures d'accroche du poteau de l'autre cloison pré-montée. Avantageusement, ledit cavalier de verrouillage, de section en U assure le blocage de l'assemblage en étant positionné à cheval sur ledit poteau, une première partie du cavalier en U, engageant par emboitement avec la traverse supérieure d'une des cloisons pré-montées, une deuxième partie du cavalier engageant par emboitement avec la traverse supérieure de l'autre cloison pré-montée.

En bloquant la possibilité de pivotement entre les deux cloisons pré-montées, le cavalier interdit le pivotement de la nervure dans le sens contraire à l'accrochage, ce qui bloque l'assemblage.

De préférence, les premières nervures sont espacées les unes des autres à intervalle régulier autour de la surface extérieure du poteau.

Dans une variante avantageuse, les T de chaque paire de nervures voisines entre elles forment un angle sensiblement égal à 45°.

Dans cette variante, le poteau consiste donc en un poteau multidirectionnel avec huit rainures correspondant à huit directions.

Avantageusement, la pluralité de nervures présente une configuration étoilée centrée sur l'axe longitudinal du poteau.

Avantageusement, chaque poteau comporte un pied anti-poinçonnement destiné à reposer sur le sol.

De préférence, le poteau et le profilé sont composés au moins partiellement en aluminium.

De préférence, le panneau de cloisonnement est composé au moins partiellement dans un matériau composite ou équivalent. Il peut également être composé dans un matériau de type menuiserie en bois ou contreplaqué.

Corrélativement, la présente invention concerne selon un deuxième aspect une utilisation d'un équipement tel que décrit ci-dessus pour le cloisonnement modulaire d'un espace ouvert du type salle d'exposition en vue de la création de stands pour une manifestation de type salon ou un congrès.

Alternativement, la présente invention concerne selon un troisième aspect l'utilisation d'un équipement tel que décrit ci-dessus pour le cloisonnement modulaire d'un plateau d'immeuble en vue de l'aménagement de bureaux.

La présente invention concerne également selon un quatrième aspect un procédé d'assemblage d'une première cloison avec un premier poteau directionnel, ladite première cloison comportant un panneau de cloisonnement, une traverse haute, une traverse basse, et des montants verticaux formés respectivement par un profilé comprenant une deuxième nervure, dite d'accroche, présentant une section sensiblement en forme de L, et un deuxième poteau directionnel, destiné à coopérer avec un profilé comprenant une nervure d'accroche d'une deuxième cloison.
Selon l'invention, ledit premier poteau directionnel, comporte une pluralité de premières nervures, en saillie, s'étendant le long dudit premier poteau directionnel et présentant chacune une section sensiblement en forme de T, chaque paire de nervures voisines entre elles formant une rainure d'accroche, et Selon le procédé, ladite première cloison est une cloison pré-montée avant assemblage solidaire de la cloison pré-montée avec ledit premier poteau directionnel, ladite cloison pré-montée comportant ledit panneau de cloisonnement, la traverse haute, la traverse basse, et les montants verticaux formés, pour un premier montant, par le profilé comprenant une deuxième nervure, dite d'accroche, présentant une section sensiblement en forme de L, et, pour un deuxième montant, par le deuxième poteau directionnel, destiné à coopérer avec le profilé comprenant une nervure d'accroche de la deuxième cloison.

Selon le procédé, on obtient l'assemblage solidaire de la première cloison pré-montée avec ledit premier poteau directionnel par un emboitement en façade de ladite deuxième nervure d'accroche dans l'une des rainures d'accroche dudit premier poteau directionnel, ledit emboîtement consistant en un mouvement d'engagement de ladite deuxième nervure d'accroche dans ladite rainure d'accroche puis un mouvement de pivotement de la première cloison pré-montée de manière à ce que le L de la deuxième nervure d'accroche vienne en butée contre le T d'une des premières nervures de ladite rainure pour empêcher un désengagement de ladite deuxième nervure d'accroche.

Dans une variante selon laquelle le profilé comprend un trou taraudé, le procédé comporte avantageusement le verrouillage en position de la cloison avec le poteau par un vissage à travers le trou taraudé d'une vis de verrouillage.

Ainsi, la présente invention, par ses différentes caractéristiques techniques structurelles et fonctionnelles, permet d'assembler par un emboîtement en façade une cloison avec un poteau.

La présente invention propose donc un mécanisme d'assemblage simple à mettre en oeuvre permettant aux opérateurs en charge du cloisonnement d'un espace ouvert de travailler efficacement en assemblant en un minimum de temps et de manipulation les cloisons entre elles.

### Brève description des figures annexées

D'autres caractéristiques et avantages de la présente invention ressortiront de la description ci-dessous, en référence aux figures la-lb à 4 annexées qui en illustrent un exemple de réalisation dépourvu de tout caractère limitatif et sur lesquelles :
- les figures 1a et 1b représentent respectivement une vue schématique en perspective et une vue en coupe de dessus du profilé d'une cloison selon un exemple de réalisation de la présente invention ;
- les figures 2a et 2b représentent respectivement une vue schématique en perspective et une vue en coupe de dessus d'un poteau selon un exemple de réalisation de la présente invention ;
- les figures 3a à 3e représentent de façon schématique les différentes phases de l'emboîtement en façade lors de l'assemblage du poteau avec la cloison ;
- la figure 4 représente de façon schématique une vue de dessus du cloisonnement d'un espace ouvert avec un équipement selon la présente invention ;

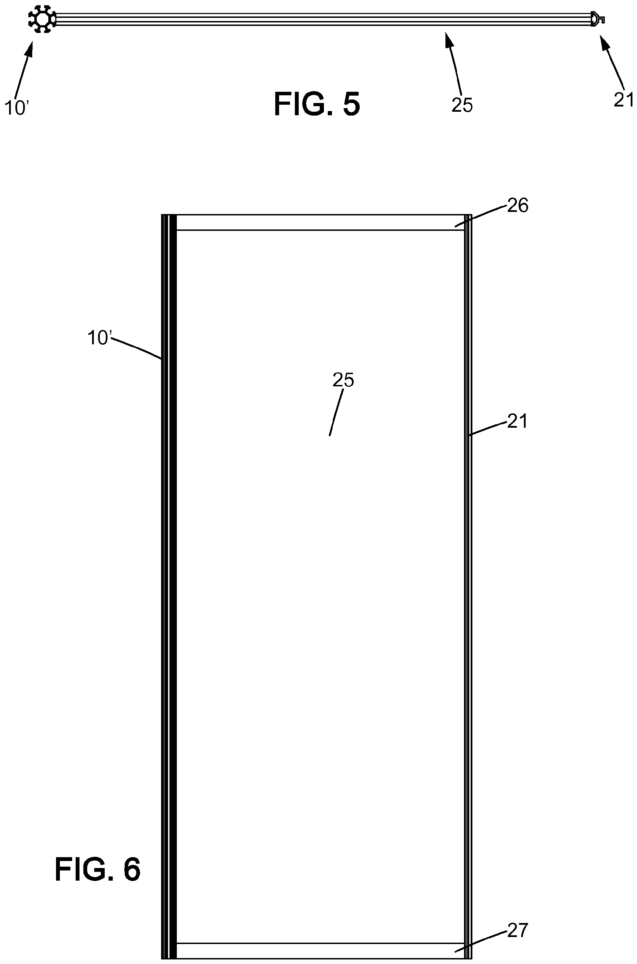

- La figure 5 et la figure 6 sont des vues, respectivement de dessus et de face, d'une cloison pré-montée comprenant un panneau et un cadre formé de traverses et de montant, l'un des montants étant un profilé d'accroche, l'autre montant un poteau multidirectionnel,
- La figure 7 est une vue de face illustrant l'assemblage de deux cloisons pré-montées par emboitement de la deuxième nervure du profilé d'accroche de l'une des cloisons pré-montées dans la rainure du poteau multidirectionnel de l'autre cloison pré-montée,
- La figure 7a est une vue de détail d'un cavalier assurant le verrouillage de l'assemblage de la figure 7, en bloquant la possibilité de pivotement entre les deux cloisons pré-montées,
- La figure 7b est une vue de détail d'un pied anti-poinçonnement destiné à reposer au sol intercalé entre l'extrémité inférieure du poteau et le sol,
- La figure 8 est une vue de dessus de l'assemblage de la figure 7.

### Description détaillée d'un exemple de réalisation avantageux

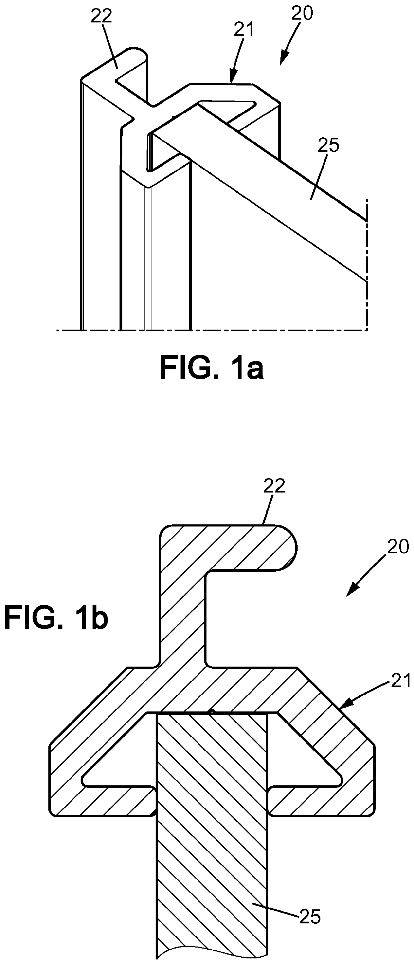

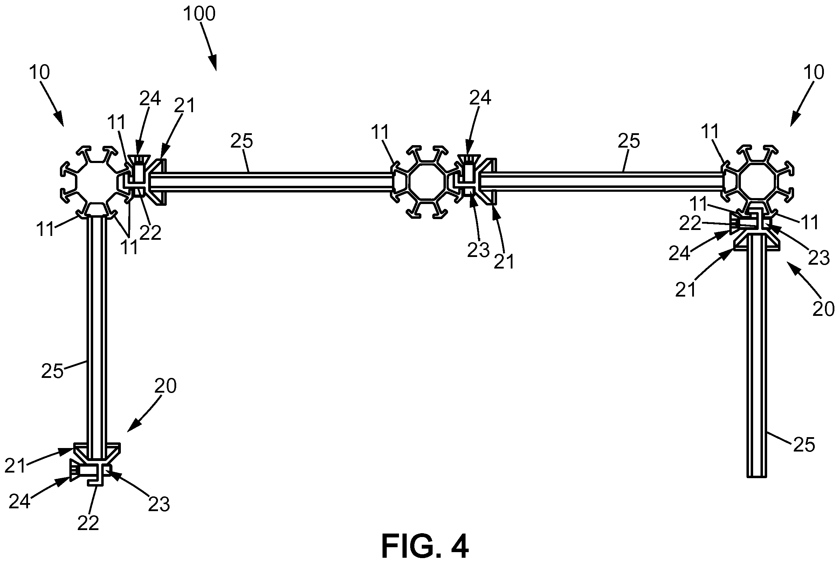

Un équipement de cloisonnement selon un exemple de réalisation avantageux va maintenant être décrit dans ce qui va suivre en faisant référence conjointement aux figures 1a-1b à 4.

Comme expliqué précédemment, les solutions envisagées jusqu'à présent pour l'assemblage d'un poteau avec une cloison sont complexes : elles sont longues, impliquent de nombreuses manipulations et nécessitent bien souvent l'utilisation d'un outillage spécifique.

Un des objectifs de la présente invention est donc de proposer un mécanisme d'assemblage simple à mettre en oeuvre pour le cloisonnement d'un espace ouvert tel qu'une salle nue pour la création de stands en vue de l'organisation d'une manifestation du type salon ou congrès.

On comprendra ici que d'autres applications peuvent également être envisagées comme par exemple le cloisonnement d'un plateau d'immeuble pour la création de bureaux et/ou d'espaces de travail.

Dans l'exemple décrit ici, on dispose d'un équipement de cloisonnement 100 qui comporte au moins un poteau 10 et au moins une cloison 20.

Dans cet exemple et comme illustré en figures 2a et 2b, chaque poteau 10, de préférence en aluminium, est de forme tubulaire.

Dans cet exemple, chaque poteau 10 comprend plus particulièrement une pluralité de nervures 11, dites premières nervures, qui sont en saillie et s'étendent le long du poteau 10.

Dans cet exemple, et comme illustré notamment en figure 1b, ces premières nervures 11 présentent chacune une section sensiblement en forme de T.

Toujours comme illustré en figure 1b, ces premières nervures 11 sont agencées autour de la surface extérieure du poteau 10 de manière à présenter une configuration étoilée centrée sur l'axe longitudinal A du poteau 10.

Ici, les premières nervures 11 sont espacées les unes des autres à intervalle régulier.

Dans cet exemple, les T de chaque paire de nervures 11 voisines entre elles forment un angle α sensiblement égal à 45°. On notera ici dans cet exemple que le poteau 10 comprend alors huit nervures 11.

Bien évidemment, on peut prévoir d'autres exemples de réalisation avec un autre nombre de nervures.

Dans cet exemple, les paires de nervures 11, qui sont voisines entre elles, forment une rainure d'accroche 12 ; de ce fait, le poteau 10 dans cet exemple comporte huit rainures d'accroche 12.

Un tel poteau 10 avec ces rainures 12 est un poteau dit directionnel : on comprendra en effet dans la suite de la description que les rainures d'accroche 12 permettent d'orienter la cloison 20 dans une direction ou dans une autre.

Dans cet exemple, la cloison 20 est pré-montée ; elle comprend les traverses haute et basse, repérées 26 et 27, le panneau de cloisonnement 25 (par exemple en menuiserie ou en matériau composite) et les montants verticaux qui sont ici formés notamment par le profilé 21 et un poteau directionnel 10' destiné à coopérer avec le profilé d'une autre cloison.

Les traverses 26,27 et les montants peuvent être assemblés par leurs extrémités, par exemple par vissage, rivets ou autres. Une gorge périphérique intérieure peut courir le long des montants et des traverses, recevoir le panneau de cloisonnement 25.

Le profilé 21, qui de préférence est en aluminium, présente une configuration spécifique qui va lui permettre de coopérer avec le poteau 10, et notamment avec les rainures d'accroche 12 du poteau 10.

Plus particulièrement, dans l'exemple décrit et comme illustré en figures la et 1b, le profilé 21 comprend une nervure d'accroche 22, dite deuxième nervure.

Cette nervure 22 présente de façon caractéristique une section sensiblement en forme de L.

Cette forme de L est apte à coopérer avec les rainures d'accroche 12 du poteau 10.

En effet, grâce à cette configuration spécifique du poteau 10 et du profilé 21, il est possible selon l'invention d'emboîter en façade la deuxième nervure d'accroche 22 dans l'une des rainures d'accroche 12 du poteau 10.

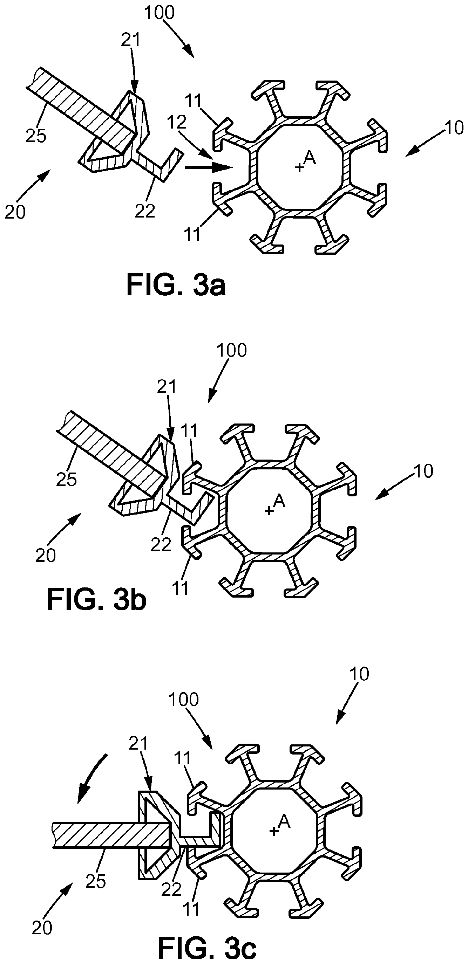

Cet emboîtement en façade, illustré aux figures 3a à 3e, est caractéristique de la présente invention.

En figure 3a, l'opérateur saisit la cloison pré-montée 20, et présente le profilé 21 du panneau 20 devant l'une des rainures 12 du poteau 10, légèrement en oblique par rapport à celle-ci.

Comme illustré en figure 3b, il engage ensuite la deuxième nervure d'accroche 22 du profilé dans cette rainure 12 selon un angle d'engagement.

On comprendra ici que cet angle d'engagement est sensiblement oblique de sorte à ce que ladite nervure 22 pénètre dans la rainure 12. On notera ici qu'il est difficile, voire impossible, d'introduire la nervure 22 dans la rainure 12 selon son axe médian. Une telle introduction nécessiterait une grande précision, ce qui n'est pas possible dans le contexte d'un tel chantier de cloisonnement.

Une fois le L de la nervure 22 engagé au moins partiellement dans la rainure 12, l'opérateur pivote la cloison 20 pour que celle-ci soit dans l'axe médian de la rainure 12 ; le panneau de cloisonnement 25 est alors dans le prolongement de la rainure 12 (voir figure 3c).

L'opérateur n'a plus qu'à tirer la cloison 20 jusqu'à ce que la barre du L entre en contact intime avec le T d'une des nervures 11 de la rainure 12.

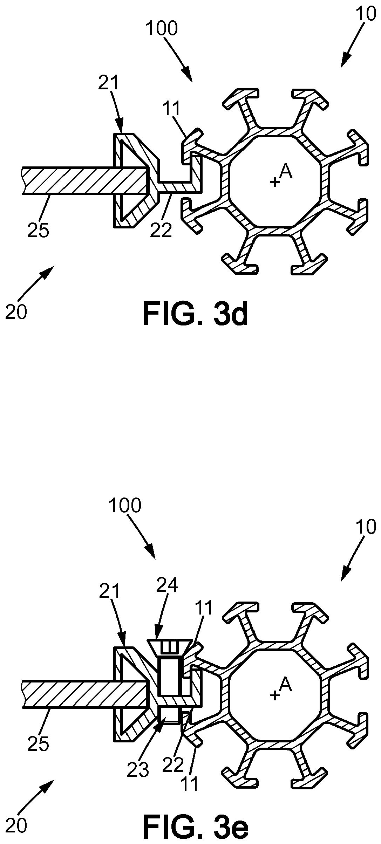

Une fois dans cette position, le L de la nervure 22 est en butée contre T de la nervure 11 (voir figure 3d), ce qui évite un désengagement de la nervure 22.

Pour verrouiller en position la cloison 20 avec le poteau 10, il est prévu une ultime étape au cours de laquelle l'opérateur introduit une ou plusieurs vis de verrouillage 24 dans un ou plusieurs trous taraudés 23 ménagés sur le L de la nervure 22 (voir figure 3e).

Cette étape supplémentaire, non obligatoire et optionnelle, permet de consolider la structure. Elle peut se réaliser à l'aide d'un simple système vis-écrou.

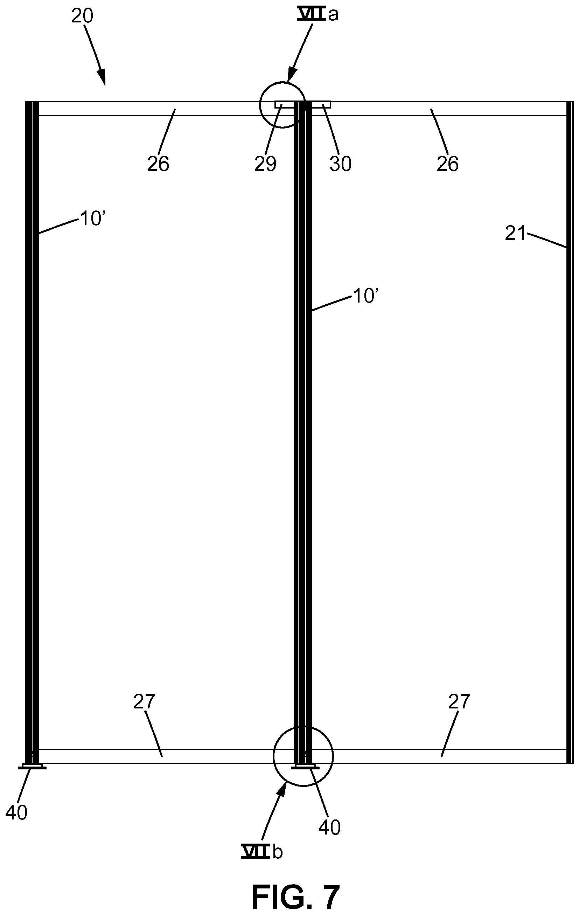

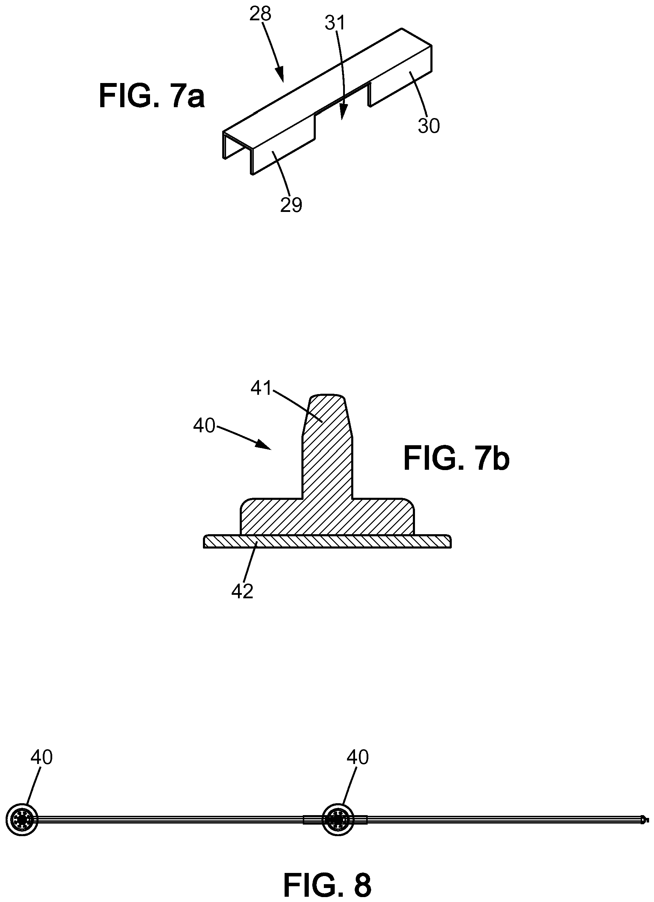

Alternativement, et selon un mode de réalisation avantageux, il est possible de verrouiller l'assemblage au moyen d'un cavalier de verrouillage 28, illustré à titre d'exemple à la figure 7a. Deux cloisons 20 pré-montées successives sont assemblées de manière coplanaire, par emboitement de la deuxième nervure d'accroche 22 du profilé 21 d'une des cloisons pré-montées dans l'une des rainures d'accroche du poteau 10' de l'autre cloison pré-montée, tel qu'illustré à titre indicatif à la figure 7 et à la figure 8. Il est alors possible de verrouiller l'assemblage par simple emboitement du cavalier 28 en partie supérieure de l'assemblage.

On obtient le blocage de l'assemblage en positionnant le cavalier à cheval 28 sur ledit poteau 10', une première partie 29 du cavalier en U, engageant par emboitement avec la traverse supérieure 26 d'une des cloisons-pré-montées 20, une deuxième partie 30 du cavalier engageant par emboitement avec la traverse supérieure 26 de l'autre cloison pré-montée. En bloquant la possibilité de pivotement entre les deux cloisons pré-montées, le cavalier 28 interdit le pivotement de la nervure 22 dans le sens contraire à l'accrochage, ce qui bloque l'assemblage.

Le cavalier 28 peut ainsi comprendre essentiellement un profilé en U, présentant une échancrure 31, délimitant le première partie 29 en U et la deuxième partie 30 en U. Lors de la pose du cavalier 28, l'extrémité supérieure du poteau 10' vient se loger dans l'échancrure 31, entre les deux parties 29, et 30, qui viennent respectivement à cheval et en prise avec les deux traverses haute 26 des cloisons pré-montées de l'assemblage.

On comprend ainsi que, par ces simples manipulations, il est possible pour un opérateur d'emboîter en façade la nervure 22 du profilé 21 dans l'une des rainures 12 du poteau 10, ce qui lui permet en un minimum de temps d'assembler solidairement une cloison 20 avec un poteau 10.

La figure 7b illustre un pied anti-poinçonnement qui est constitué par un élément d'un seul tenant notamment plastique. Ce pied comprend une embase 42 destinée à prendre appui au sol, et un plot de montage 41, supérieur destiné à être emboîté dans un creux central à l'extrémité inférieure du poteau 10'.

L'opérateur peut alors enchaîner rapidement l'assemblage de plusieurs cloisons 10 entre elles afin d'aménager un espace vide en un minimum de temps.

La présente invention trouve ainsi une application toute dédiée à l'aménagement des espaces ouverts lors par exemple d'un cloisonnement pour l'organisation d'une manifestation de type salon ou congrès.

Bien évidemment, comme expliqué précédemment, d'autres applications avantageuses peuvent être envisagées dans le cadre de la présente invention.

Il devra être observé que cette description détaillée porte sur un exemple de réalisation particulier de la présente invention, mais qu'en aucun cas cette description ne revêt un quelconque caractère limitatif à l'objet de l'invention ; bien au contraire, elle a pour objectif d'ôter toute éventuelle imprécision ou toute mauvaise interprétation des revendications qui suivent.

### NOMENCLATURE

10, 10'. Poteaux multidirectionnels,
11. Nervures (poteau),
12. Rainures d'accroche (poteau),
21. Profilé (d'accroche),
22. Nervures d'accroche (profilé),
23. Trou taraudé,
24. Vis,
25. Panneau de cloisonnement,
26. Traverse haute,
27. Traverse basse,
28. Cavalier de verrouillage,
29, 30. Première partie et seconde partie du cavalier,
31. Échancrure,
40. Pieds,
41. Plot,
42. Embase,
100. Equipement de cloisonnement modulaire.

## Revendications

1. Equipement de cloisonnement modulaire (100) d'un espace ouvert comportant :
- au moins un poteau (10), dit premier poteau directionnel (10), comprenant une pluralité de premières nervures (11), en saillie, s'étendant le long dudit premier poteau directionnel (10) et présentant chacune une section sensiblement en forme de T, chaque paire de nervures (11) voisines entre elles formant une rainure d'accroche (12),
- au moins une cloison (20), dite première cloison (20), comportant un panneau de cloisonnement (25) et un premier montant vertical formé par un profilé (21) comprenant une deuxième nervure (22), dite deuxième nervure d'accroche (22), présentant une section sensiblement en forme de L permettant l'assemblage solidaire de la première cloison (20) avec ledit au moins un premier poteau directionnel (10) obtenu par emboitement en façade de ladite deuxième nervure d'accroche (22) dans l'une des rainures d'accroche (12) dudit premier poteau directionnel (10),
ledit équipement (100) étant **caractérisé en ce que** ladite au moins une première cloison (20) est une cloison pré-montée, qui comporte le panneau de cloisonnement (25), ainsi que le premier montant vertical formé par ledit profilé (21) comprenant la deuxième nervure d'accroche (22), ladite au moins une première cloison (20) comportant encore une traverse haute (26), une traverse basse (27), ainsi qu'un deuxième montant formé par un deuxième poteau directionnel (10'), destiné à coopérer avec un profilé d'accroche d'une deuxième cloison (20),
et **en ce que** ladite première cloison (20) est pré-montée avant l'assemblage solidaire de la cloison pré-montée (20) avec ledit au moins un premier poteau directionnel (10) obtenu par emboitement en façade de ladite deuxième nervure d'accroche (22) dans l'une des rainures d'accroche (12) dudit premier poteau directionnel (10), par un mouvement d'engagement de ladite deuxième nervure d'accroche (22) dans ladite rainure d'accroche (12) puis par un mouvement de pivotement de la première cloison (20) pré-montée de manière à ce que le L de la deuxième nervure d'accroche (22) vienne en butée contre le T d'une des premières nervures (11) de ladite rainure d'accroche (12) pour empêcher un désengagement de ladite deuxième nervure d'accroche (22).

2. Equipement (100) selon la revendication 1, dans lequel deux cloisons (20) pré-montées successives étant assemblées de manière coplanaire, par emboitement de la deuxième nervure d'accroche (22) du profilé (21) d'une des cloisons pré-montées (20) dans l'une des rainures d'accroche (12) du deuxième poteau directionnel (10') de l'autre cloison pré-montée, et dans lequel ledit équipement comprend un cavalier de verrouillage (28), de section en U assurant le blocage de l'assemblage en étant positionné à cheval sur ledit premier poteau directionnel (10), une première partie (29) du cavalier en U, engageant par emboitement avec la traverse supérieure (26) d'une des cloisons-pré-montées, une deuxième partie (30) du cavalier engageant par emboitement avec la traverse supérieure (26) de l'autre cloison pré-montée.

3. Equipement (100) selon la revendication 1 ou 2, dans lequel les premières nervures (11) sont espacées les unes des autres à intervalle régulier autour de la surface extérieure du premier poteau directionnel (10).

4. Equipement (100) selon la revendication 3, dans lequel les T de chaque paire de première nervures (11) voisines entre elles forment un angle sensiblement égal à 45°.

5. Equipement (100) selon la revendication 4, dans lequel ladite pluralité de premières nervures (11) présente une configuration étoilée centrée sur l'axe longitudinal (A) du premier poteau directionnel (10).

6. Equipement (100) selon l'une quelconque des revendications 1 à 5, dans lequel chaque premier poteau directionnel (10) est pourvu d'un pied anti-poinçonnement (40) destiné à reposer sur le sol, constitué par un élément d'un seul tenant comprenant une embase (42) destinée à prendre appui au sol, et un plot de montage (41) destiné à être emboîté dans un creux central à l'extrémité inférieure du deuxième poteau directionnel (10').

7. Equipement (100) selon l'une quelconque des revendications 1 à 6, dans lequel ledit premier poteau directionnel (10) et ledit profilé (21) sont composés au moins partiellement en aluminium.

8. Utilisation d'un équipement (100) selon l'une des revendications 1 à 7 pour le cloisonnement modulaire d'un espace ouvert du type salle d'exposition en vue de la création d'un ou plusieurs stands pour une manifestation du type salon ou congrès.

9. Procédé d'assemblage d'une première cloison (20) avec un premier poteau directionnel (10), ladite première cloison (20) comportant un panneau de cloisonnement (25), une traverse haute (26), une traverse basse (27), et des montants verticaux formés respectivement par un profilé (21) comprenant une deuxième nervure (22), dite d'accroche, présentant une section sensiblement en forme de L, et un deuxième poteau directionnel (10'), destiné à coopérer avec un profilé (21) comprenant une nervure d'accroche (22) d'une deuxième cloison(20), dans lequel ledit premier poteau directionnel (10), comporte une pluralité de premières nervures (11), en saillie, s'étendant le long dudit premier poteau directionnel (10) et présentant chacune une section sensiblement en forme de T, chaque paire de nervures (11) voisines entre elles formant une rainure d'accroche (12),
**caractérisé en ce que** ladite première cloison (20) est une cloison pré-montée avant assemblage solidaire de la première cloison (20) pré-montée avec ledit premier poteau directionnel (10), ladite première cloison (20) pré-montée comportant ledit panneau de cloisonnement (25), la traverse haute (26), la traverse basse (27), et les montants verticaux formés, pour un premier montant, par le profilé (21) comprenant une deuxième nervure (22), dite d'accroche, présentant une section sensiblement en forme de L, et, pour un deuxième montant, par le deuxième poteau directionnel (10'), destiné à coopérer avec le profilé (21) comprenant une nervure d'accroche (22) de la deuxième cloison (20),
et **en ce qu'**on obtient l'assemblage solidaire de la première cloison (20) pré-montée avec ledit premier poteau directionnel (10) par un emboitement en façade de ladite deuxième nervure d'accroche (22) dans l'une des rainures d'accroche (12) dudit premier poteau directionnel (10), ledit emboîtement consistant en un mouvement d'engagement de ladite deuxième nervure d'accroche (22) dans ladite rainure d'accroche (12) puis un mouvement de pivotement de la première cloison (20) pré-montée de manière à ce que le L de la deuxième nervure d'accroche (22) vienne en butée contre le T d'une des premières nervures (11) de ladite rainure d'accroche (12) pour empêcher un désengagement de ladite deuxième nervure d'accroche (22).

10. Procédé selon la revendication 9, dans lequel on assemble de manière coplanaire deux cloisons (20) pré-montées successives, par emboitement de la deuxième nervure d'accroche (22) du profilé (21) d'une des cloisons pré-montées (20) dans l'une des rainures d'accroche (12) du deuxième poteau directionnel (10') de l'autre cloison pré-montée, et dans lequel ledit équipement comprenant un cavalier de verrouillage (28), de section en U, on obtient le blocage de l'assemblage en positionnant le cavalier à cheval sur ledit premier poteau directionnel (10), une première partie (29) du cavalier en U, engageant par emboitement avec la traverse supérieure (26) d'une des cloisons pré-montées, une deuxième partie (30) du cavalier en U engageant par emboitement avec la traverse supérieure (26) de l'autre cloison pré-montée.

## Patentansprüche

1. Modulare Ausrüstung (100) zum Trennen eines offenen Raums, umfassend:
- mindestens einen als erster Richtungspfosten (10) bezeichneten Pfosten (10), der eine Vielzahl von vorspringenden ersten Rippen (11) umfasst, die sich dem ersten Richtungspfosten (10) entlang erstrecken und jede einen Querschnitt von im Wesentlichen T-Form aufweisen, wobei jedes Paar benachbarter Rippen (11) zwischen sich eine Hakenrille (12) bildet,
- mindestens eine als erste Trennwand (20) bezeichnete Trennwand (20), die eine Trennscheibe (25) und eine erste vertikale Strebe umfasst, welche von einem Profil (21) gebildet wird, das eine als zweite Hakenrippe (22) bezeichnete zweite Rippe (22) umfasst, die einen Querschnitt von im Wesentlichen L-Form aufweist, der das feste Verbinden der ersten Trennwand (20) mit dem mindestens einen ersten Richtungspfosten (10) ermöglicht, das durch frontseitiges Einstecken der zweiten Hakenrippe (22) in eine der Hakenrillen (12) des ersten Richtungspfostens (10) erhalten wird,
wobei die Ausrüstung (100) **dadurch gekennzeichnet ist, dass** die mindestens eine erste Trennwand (20) eine vormontierte Trennwand ist, die die Trennscheibe (25) sowie die erste vertikale Strebe umfasst, welche von dem Profil (21) gebildet wird, das die zweite Hakenrippe (22) umfasst, wobei die mindestens eine erste Trennwand (20) noch einen oberen Querträger (26), einen unteren Querträger (27) sowie eine zweite Strebe umfasst, die von einem zweiten Richtungspfosten (10') gebildet wird, der dazu bestimmt ist, mit einem Hakenprofil einer zweiten Trennwand (20) zusammenzuwirken,
und dadurch, dass die erste Trennwand (20) vormontiert ist vor dem festen Verbinden der vormontierten Trennwand (20) mit dem mindestens einen ersten Richtungspfosten (10), das durch frontseitiges Einstecken der zweiten Hakenrippe (22) in eine der Hakenrillen (12) des ersten Richtungspfostens (10), durch eine Eingriffsbewegung der zweiten Hakenrippe (22) in die Hakenrille (12), und anschließend durch eine Schwenkbewegung der vormontierten ersten Trennwand (20) erhalten wird, sodass das L der zweiten Hakenrippe (22) am T einer der ersten Rippen (11) der Hakenrille (12) in Anschlag kommt, um ein Ausrücken der zweiten Hakenrippe (22) zu verhindern.

2. Ausrüstung (100) nach Anspruch 1, wobei zwei aufeinanderfolgende vormontierte Trennwände (20) koplanar durch Einstecken der zweiten Hakenrippe (22) des Profils (21) einer der vormontierten Trennwände (20) in eine der Hakenrillen (12) des zweiten Richtungspfostens (10') der anderen vormontierten Trennwand verbunden werden, und wobei die Ausrüstung einen Verriegelungsbügel (28) von U-förmigem Querschnitt umfasst, der die Arretierung der Verbindung sicherstellt, indem er rittlings auf dem ersten Richtungspfosten (10) positioniert wird, wobei ein erster Teil (29) des U-förmigen Bügels durch Einstecken in den oberen Querträger (26) einer der vormontierten Trennwände eingreift, wobei ein zweiter Teil (30) des Bügels durch Einstecken in den oberen Querträger (26) der anderen vormontierten Trennwand eingreift.

3. Ausrüstung (100) nach Anspruch 1 oder 2, wobei die ersten Rippen (11) in regelmäßigem Intervall voneinander um die Außenfläche des ersten Richtungspfostens (10) herum beabstandet sind.

4. Ausrüstung (100) nach Anspruch 3, wobei die T jedes Paares benachbarter erster Rippen (11) zwischen sich einen Winkel von im Wesentlichen gleich 45° bilden.

5. Ausrüstung (100) nach Anspruch 4, wobei die Vielzahl von ersten Rippen (11) eine sternförmige Konfiguration aufweist, die auf der Längsachse (A) des ersten Richtungspfostens (10) zentriert ist.

6. Ausrüstung (100) nach einem der Ansprüche 1 bis 5, wobei jeder erste Richtungspfosten (10) mit einem Eindruckschutzfuß (40) versehen ist, der dazu bestimmt ist, auf dem Boden zu ruhen, bestehend aus einem einstückigen Element, das einen Sockel (42) umfasst, der dazu bestimmt ist, auf dem Boden aufzuliegen, und einen Montagestift (41), der dazu bestimmt ist, in einen zentralen Hohlraum am unteren Ende des zweiten Richtungspfostens (10') eingesteckt zu werden.

7. Ausrüstung (100) nach einem der Ansprüche 1 bis 6, wobei der erste Richtungspfosten (10) und das Profil (21) mindestens teilweise aus Aluminium bestehen.

8. Verwendung einer Ausrüstung (100) nach einem der Ansprüche 1 bis 7 zum modularen Trennen eines offenen Raums vom Typ einer Ausstellungshalle im Hinblick auf die Schaffung von einem oder mehreren Ständen für eine Veranstaltung vom Typ einer Messe oder eines Kongresses.

9. Verfahren zum Verbinden einer ersten Trennwand (20) mit einem ersten Richtungspfosten (10), wobei die erste Trennwand (20) eine Trennscheibe (25), einen oberen Querträger (26), einen unteren Querträger (27) und vertikale Streben umfasst, die jeweils von einem Profil (21) gebildet werden, das eine als Hakenrippe bezeichnete zweite Rippe (22) umfasst, welche einen Querschnitt von im Wesentlichen L-Form aufweist, und einem zweiten Richtungspfosten (10'), der dazu bestimmt ist, mit einem eine Hakenrippe (22) umfassenden Profil (21) einer zweiten Trennwand (20) zusammenzuwirken,
wobei der erste Richtungspfosten (10) eine Vielzahl von vorspringenden ersten Rippen (11) umfasst, die sich dem ersten Richtungspfosten (10) entlang erstrecken und jede einen Querschnitt von im Wesentlichen T-Form aufweisen, wobei jedes Paar benachbarter Rippen (11) zwischen sich eine Hakenrille (12) bildet,
**dadurch gekennzeichnet, dass** die erste Trennwand (20) eine vor dem festen Verbinden der ersten vormontierten Trennwand (20) mit dem ersten Richtungspfosten (10) vormontiere Trennwand ist, wobei die erste vormontierte Trennwand (20) die Trennscheibe (25), den oberen Querträger (26), den unteren Querträger (27) und die vertikalen Streben umfasst, die bei einer ersten Strebe von dem Profil (21) gebildet werden, das eine als Hakenrippe bezeichnete zweite Rippe (22) umfasst, welche einen Querschnitt von im Wesentlichen L-Form aufweist, und bei einer zweiten Strebe vom zweiten Richtungspfosten (10'), der dazu bestimmt ist, mit dem eine Hakenrippe (22) umfassenden Profil (21) der zweiten Trennwand (20) zusammenzuwirken,
und dadurch, dass die feste Verbindung der ersten vormontierten Trennwand (20) mit dem ersten Richtungspfosten (10) durch ein frontseitiges Einstecken der zweiten Hakenrippe (22) in eine der Hakenrillen (12) des ersten Richtungspfostens (10) erhalten wird, wobei das Einstecken in einer Eingriffsbewegung der zweiten Hakenrippe (22) in die Hakenrille (12), und anschließend einer Schwenkbewegung der vormontierten ersten Trennwand (20) besteht, sodass das L der zweiten Hakenrippe (22) am T einer der ersten Rippen (11) der Hakenrille (12) in Anschlag kommt, um ein Ausrücken der zweiten Hakenrippe (22) zu verhindern.

10. Verfahren nach Anspruch 9, wobei zwei aufeinanderfolgende vormontierte Trennwände (20) durch Einstecken der zweiten Hakenrippe (22) des Profils (21) einer der vormontierten Trennwände (20) in eine der Hakenrillen (12) des zweiten Richtungspfostens (10') der anderen vormontierten Trennwand koplanar verbunden werden, und wobei, da die Ausrüstung einen Verriegelungsbügel (28) von U-förmigem Querschnitt umfasst, die Arretierung der Verbindung durch Positionieren des Bügels rittlings auf dem ersten Richtungspfosten (10) erhalten wird, wobei ein erster Teil (29) des U-förmigen Bügels durch Einstecken in den oberen Querträger (26) einer der vormontierten Trennwände eingreift, wobei ein zweiter Teil (30) des U-förmigen Bügels durch Einstecken in den oberen Querträger (26) der anderen vormontierten Trennwand eingreift.

## Claims

1. Modular partition equipment (100) for an open space comprising:
- at least one pole (10), referred to as the first directional pole (10), comprising a plurality of first projecting ribs (11) which extend along said first directional pole (10) and each have a cross-section which is essentially in the form of a T, each pair of adjacent ribs (11) forming between them a clipping groove (12),
- at least one partition (20), referred to as the first partition (20), comprising a partitioning panel (25) and a first vertical upright formed by a profile (21) comprising a second rib (22), referred to as the second clipping rib (22), with a cross-section which is substantially in the form of an L which enables the connecting assembly of the first partition (20) with said at least one first directional pole (10) obtained by slotting the face of said second clipping rib (22) into one of the clipping grooves (12) of said first directional pole (10),
said equipment (100) being **characterised in that** said at least one first partition (20) is a premounted partition, which comprises the partitioning panel (25) as well as the first vertical upright formed by said profile (21) comprising the second clipping rib (22), said at least one first partition (20) also comprising an upper crosspiece (26), a lower crosspiece (27) as well as a second upright formed by a second directional pole (10') which is designed to cooperate with a clipping profile of a second partition (20), and **in that** said first partition (20) is premounted before the connecting assembly of the premounted partition (20) with said at least one first directional pole (10) obtained by slotting the face of said second clipping rib (22) into one of the clipping grooves (12) of said first directional pole (10) by an engagement movement of said second clipping rib (22) into said clipping groove (12) then by a pivoting movement of the first premounted partition (20) such that the L of the second clipping rib (22) abuts against the T of one of the first ribs (11) of said clipping groove (12) to prevent the disengagement of said second clipping rib (22).

2. Equipment (100) according to claim 1, wherein two premounted successive partitions (20) are assembled in a coplanar manner, by slotting the second clipping rib (22) of the profile (21) of one of the premounted partitions (20) into one of the clipping grooves (12) of the second directional pole (10') of the other premounted partition, and wherein said equipment comprises a locking bracket (28), with a U-shaped cross-section, which ensures the locking of the assembly by being positioned either side of said first directional pole (10), a first section (29) of the U-shaped bracket engaging by slotting with the upper crosspiece (26) of one of the premounted partitions, a second section (30) of the bracket engaging by slotting with the upper crosspiece (26) of the other premounted partition.

3. Equipment (100) according to claim 1 or 2, wherein the first ribs (11) are spaced apart from one another at a regular interval around the outer surface of the first directional pole (10).

4. Equipment (100) according to claim 3, wherein the Ts of each pair of first adjacent ribs (11) form between them an angle of approximately 45°.

5. Equipment (100) according to claim 4, wherein said plurality of first ribs (11) has a star configuration centred around the longitudinal axis (A) of the first directional pole (10).

6. Equipment (100) according to any of claims 1 to 5, wherein each first directional pole (10) is provided with an anti-puncturing foot (40) designed to rest on the ground, formed by an element in one piece comprising a baseplate (42) designed to bear on the ground and a mounting plug (41) designed to be slotted into a central hollow on the lower end of the second directional pole (10').

7. Equipment (100) according to any of claims 1 to 6, wherein said first directional pole (10) and said profile (21) are made at least partially from aluminium.

8. Use of equipment (100) according to any of claims 1 to 7 for the modular partitioning of an open space of the type used in an exhibition hall for the purpose of creating one or more stands for a display at a trade show or conference.

9. Method for the assembly of a first partition (20) with a first directional pole (10), said first partition (20) comprising a partitioning panel (25), an upper crosspiece (26), a lower crosspiece (27) and vertical uprights formed respectively by a profile (21) comprising a second rib (22), referred to as a clipping rib, which has a cross-section which is essentially in the form of an L, and a second directional pole (10') designed to cooperate with a profile (21) comprising a clipping rib (22) of a second partition (20), wherein said first directional pole (10) comprises a plurality of first projecting ribs (11), which extend along said first directional pole (10) and each having a cross-section which is essentially in the form of a T, each pair of adjacent ribs (11) forming between them a clipping groove (12),
**characterised in that** said first partition (20) is a premounted partition before the connecting assembly of the first premounted partition (20) with said first directional pole (10), said first premounted partition (20) comprising said partitioning panel (25), the upper cross-piece (26), the lower crosspiece (27) and the vertical uprights formed for a first upright by the profile (21) comprising a second rib (22), referred to as a clipping rib, which has a cross-section essentially in the form of an L, and for a second upright by the second directional pole (10') which is designed to cooperate with the profile (21) comprising a clipping rib (22) of the second partition (20),
and **in that** the connecting assembly of the first premounted partition (20) is obtained with said first directional pole (10) by slotting the face of said second clipping rib (22) into one of the clipping grooves (12) of said first directional pole (10), said slotting consisting of an engagement movement of said second clipping rib (22) into said clipping groove (12) then a pivoting movement of the first premounted partition (20) such that the L of the second clipping rib (22) abuts against the T of one of the first ribs (11) of said clipping groove (12) to prevent the disengagement of said second clipping rib (22).

10. Method according to claim 9, wherein in a coplanar manner two successive premounted partitions (20) are assembled by slotting the second clipping rib (22) of the profile (21) of one of the premounted partitions (20) into one of the clipping grooves (12) of the second directional pole (10') of the other premounted partition, and wherein said equipment comprises a locking bracket (28), with a U-shaped cross-section, and it is possible to lock the assembly by positioning the bracket on either side of said first directional pole (10), a first section (29) of the U-shaped bracket engaging by slotting with the upper crosspiece (26) of one of the premounted partitions, a second section (30) of the U-shaped bracket engaging by slotting with the upper crosspiece (26) of the other premounted partition.
